(19) Europäisches Patentamt
European Patent Office
Office européen des brevets

(11) Veröffentlichungsnummer: **0 023 617**
**B1**

# (12) EUROPÄISCHE PATENTSCHRIFT

(45) Veröffentlichungstag der Patentschrift: **27.06.84**

(51) Int. Cl.³: **C 09 B 29/42,** C 08 K 5/23

(21) Anmeldenummer: **80104062.7**

(22) Anmeldetag: **14.07.80**

(54) **Anthrachinonazo-Verbindungen, Verfahren zu ihrer Herstellung sowie ihre Verwendung als Pigmente.**

(30) Priorität: **27.07.79 DE 2930481**

(43) Veröffentlichungstag der Anmeldung:
**11.02.81 Patentblatt 81/6**

(45) Bekanntmachung des Hinweises auf die Patenterteilung:
**27.06.84 Patentblatt 84/26**

(84) Benannte Vertragsstaaten:
**CH DE FR GB LI**

(56) Entgegenhaltungen:
**DE - A - 1 932 808**
**DE - A - 1 932 810**
**DE - A - 2 216 207**
**FR - A - 2 014 339**
**FR - A - 2 224 521**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Rolf, Meinhard, Dr.,**
**Berta-von-Suttner-Strasse 24, D-5090 Leverkusen 1 (DE)**
Erfinder: **Neeff, Rütger, Dr.,**
**Berta-von-Suttner-Strasse 22, D-5090 Leverkusen 1 (DE)**
Erfinder: **Müller, Walter, Pfarrer-Klein-Strasse 3,**
**D-5090 Leverkusen 3 (DE)**

**EP 0 023 617 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Anthrachinonazo-Verbindungen, die in einer ihrer tautomeren Strukturen der Formel

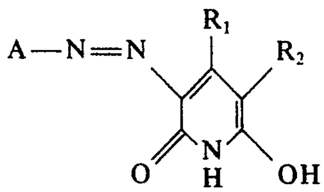

(I)

entsprechen, Verfahren zu ihrer Herstellung sowie ihre Verwendung als Pigmente.

Weitere tautomere Formen der erfindungsgemäßen Verbindungen entsprechen den Formeln

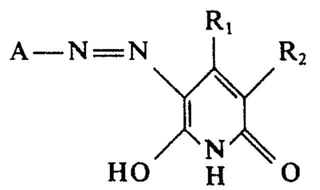

(Ia)

und

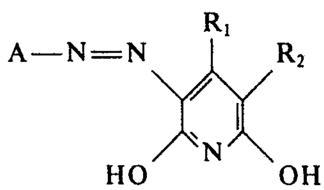

(Ib)

und

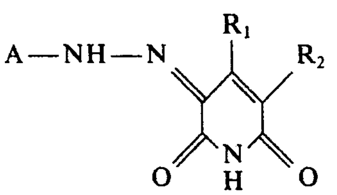

(Ic)

und

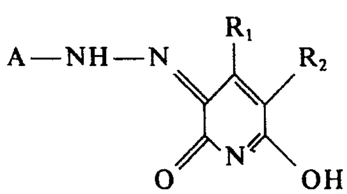

(Id)

und

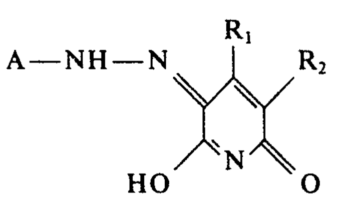

(Ie)

Der Einfachheit halber wird im folgenden jeweils nur die in Formel (I) dargestellte tautomere Form genannt. Es sei aber darauf hingewiesen, daß dieses keine Einschränkung der Erfindung bezüglich eines bestimmten Tautomeren bedeutet.

In der Formel (I) bedeuten

A einen Sulfonsäuregruppen-freien, gegebenenfalls weitersubstituierten $\alpha$-Anthrachinonrest, er vorzugsweise aus höchstens 5 kondensierten Ringen besteht,

$R_1$ Wasserstoff, Alkyl, vorzugsweise $C_1$—$C_4$-Alkyl, Aryl, vorzugsweise Phenyl oder Naphthyl, Carboxy oder Hydroxy und

$R_2$ Wasserstoff, Halogen, Nitro, Cyan, gegebenenfalls substituiertes Carbamoyl oder Sulfamoyl,

Alkylcarbonyl, insbesondere ($C_1$-$C_4$-Alkyl)-carbonyl, Alkyl- oder gegebenenfalls substituiertes Arylsulfon, vorzugsweise $C_1$-$C_4$-Alkylsulfon oder gegebenenfalls substituiertes Phenylsulfon, oder einen heteroaromatischen Rest, z.B. einen Rest der Formel

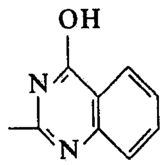

(II)

oder der Formel

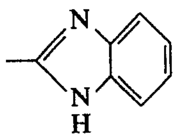

(III)

oder der Formel

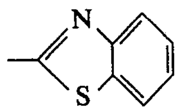

(IV)

Als Substituenten der Carbamoyl- und Sulfamoylgruppen kommen vorzugsweise $C_1$-$C_4$-Alkyl und gegebenenfalls durch $C_1$-$C_4$-Alkyl, $C_1$-$C_4$-Alkoxy, Fluor, Chlor, Brom, Nitro oder Carbonamid substituiertes Phenyl und Benzyl infrage.

Azopigmente aus Pyridon-Kupplungskomponenten sind bereits in der DE-A- 2 216 207 sowie in DE-A- 1 932 808, 1 932 810 und FR-A- 2 014 339 beschrieben. Überraschenderweise wurde nun gefunden, daß die Anthrachinonazo-Pigmente der Formel (I) bei hoher Farbstärke ausgezeichnete Echtheiten, insbesondere Licht- und Wetterechtheiten besitzen und daher eine Bereicherung der Technik darstellen.

Zur Herstellung der Anthrachinon-Derivate (I) werden Aminoanthrachinone der Formel

$A{-}NH_2$ (V)

in der A die oben angegebene Bedeutung besitzt, diazotiert und mit Kupplungskomponenten der Formel

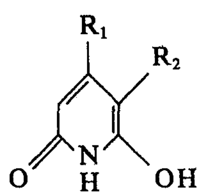

(VI)

in der $R_1$ und $R_2$ die oben angegebene Bedeutung haben, umgesetzt.

Geeignete Aminoanthrachinone der Formel (V) sind z. B.:

1-Aminoanthrachinon, 1-Amino-2-chloranthrachinon, 1-Amino-4-chloranthrachinon, 1-Amino-5-chloranthrachinon, 1-Amino-6-chloranthrachinon, 1-Amino-6-(7)-chloranthrachinon (Gemisch), 1-Amino-5,8-dichloranthrachinon, 1-Amino-2-bromanthrachinon, 1-Amino-2,4-dibromanthrachinon, 1-Amino-6,7-dichloranthrachinon, 1-Amino-6-fluoranthrachinon, 1-Amino-7-fluoranthrachinon, 1-Amino-6,7-difluoranthrachinon, 1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbonsäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-5-benzoylaminoanthrachinon, 1-Amino-4-benzoylaminoanthrachinon, 1-Amino-8-benzoylaminoanthrachinon, 1-Amino-5-(2-chlorbenzoylamino)-anthrachinon, 1-Amino-5-(3-chlorbenzoylamino)-anthrachinon, 1-Amino-5-(4-chlorbenzoylamino)-anthrachinon, 1-Amino-5-(2.5-dichlorbenzoylamino)-anthrachinon, 1-Amino-5-(3-nitrobenzoylamino)-anthrachinon, 1-Amino-4-(2-chlorbenzoylamino)-anthrachinon, 1-Amino-4-(3-chlorbenzoylamino)-anthrachinon, 1-Amino-4-(4-chlorbenzoylamino)-anthrachinon, 1-Amino-4-(2.5-dichlorbenzoylamino)-anthrachinon, 1-Amino-4-(3-nitrobenzoylamino)-anthrachinon, 1-Amino-8-(2-chlorbenzoylamino)-anthrachinon, 1-Amino-8-(3-chlorbenzoylamino)-anthrachinon, 1-Amino-8-(4-chlorbenzoylamino)-anthrachinon, 1-Amino-8-(2.5-dichlorbenzoylamino)-anthrachinon, 1-Amino-8-(3-nitrobenzoylamino)-anthrachinon, 1-Amino-2-methyl-4-benzoylamino-anthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-cyclohexylaminoanthrachinon, 1-Amino-4-anilinoanthrachinon, 1-Amino-6-methylmercaptoanthrachinon, 2-Phenyl-6-amino-4,5-phthaloylbenzimidazol, 6-Chlor-2-amino-3,4-phthaloylacridon, 7-Chlor-2-amino-3,4-phthaloylacridon, 5-Chlor-8-amino-3,4-phthaloylacridon, 3-Methyl-6-amino-anthrapyridon, 3-Methyl-7-amino-anthrapyridon, 4-Amino-1,9-pyrazolanthron, 5-Amino-1,9-pyrazolanthron, 4-Amino-1,9-anthrapyrimidin, 5-Amino-1,9-anthrapyrimidin und 5-Aminoisothiazolanthron.

Bevorzugte Anthrachinonazo-Verbindungen entsprechen der Formel

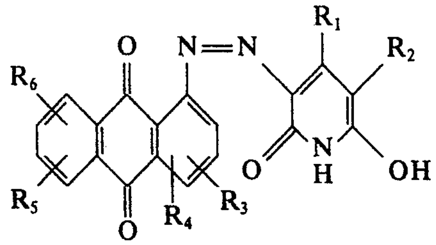

(VII)

worin $R_1$ und $R_2$ die oben genannte Bedeutung haben und

$R_3$ Wasserstoff, Halogen wie Fluor, Chlor und Brom, Nitro, $C_1$—$C_4$-Alkyl, $C_1$—$C_4$-Alkoxy, $C_1$—$C_4$-Alkylamino, Benzylamino, Cyclohexylamino, $C_1$—$C_4$-Alkyl-mercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkyl)-carbonyl, ($C_1$—$C_4$-Alkoxy)-carbonyl gegebenenfalls durch $C_1$—$C_4$-Alkyl, $C_1$—$C_4$-Alkoxy, Chlor oder Nitro substituiertes Phenylamino, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom, Nitro oder Carbonamido substituiert sein kann, Carboxy, Hydroxy, ($C_1$—$C_4$-Alkyl-)carbonylamino, gegebenenfalls durch $C_1$—$C_4$-Alkyl, $C_1$—$C_4$-Alkoxy, Fluor, Chlor, Brom oder Nitro substituiertes Benzoylamino oder gegebenenfalls durch $C_1$—$C_4$-Alkyl, $C_1$—$C_4$-Alkoxy, Fluor, Chlor, Brom oder Nitro substituiertes Benzolsulfonylamino,

$R_4$ Wasserstoff, Methyl, Chlor oder Hydroxy,

$R_5$ Wasserstoff, Halogen wie Fluor, Chlor oder Brom, Nitro, $C_1$—$C_4$-Alkyl, $C_1$—$C_4$-Alkoxy, $C_1$—$C_4$-Alkylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkyl-)carbonyl, Benzylamino, Cyclohexylamino, gegebenenfalls durch $C_1$—$C_4$-Alkyl, $C_1$—$C_4$-Alkoxy, Chlor, Brom oder Nitro substituiertes Phenylamino, Carboxy, Hydroxy, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom oder Nitro substituiert sein kann, ($C_1$—$C_4$-Alkyl-)carbonylamino, gegebenenfalls durch $C_1$—$C_4$-Alkyl, $C_1$—$C_4$-Alkoxy, Fluor, Chlor, Brom oder Nitro substituiertes Benzoylamino, $C_1$—$C_4$-Alkansulfonylamino oder gegebenenfalls durch $C_1$—$C_4$-Alkyl, $C_1$—$C_4$-Alkoxy, Fluor, Chlor, Brom oder Nitro substituiertes Benzolsulfonylamino und

$R_6$ Wasserstoff, Halogen wie Fluor, Chlor und Brom oder Hydroxy bedeuten.

Besonders bevorzugte Anthrachinonazo-Verbindungen entsprechen der Formel

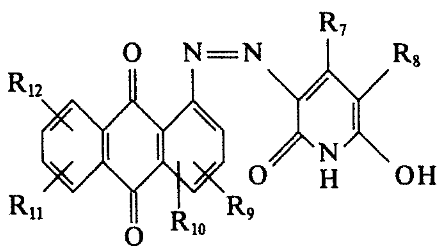

(VIII)

worin

$R_7$ Wasserstoff, Methyl, Carboxy oder Hydroxy,

$R_8$ Wasserstoff, Cyan, gegebenenfalls durch $C_1$—$C_4$-Alkyl mono- oder disubstituiertes carbamoyl oder Chlor,

$R_9$ Wasserstoff, Methyl, Chlor, Brom, Nitro, Acetyl, $C_1$—$C_4$-Alkyl-carbonyl, gegebenenfalls durch $C_1$—$C_4$-Alkyl oder Phenyl substituiertes Carbamoyl, wobei Phenyl durch $C_1$—$C_4$-Alkyl, $C_1$—$C_4$-

Alkoxy, Chlor, Brom oder Nitro substituiert sein kann, Carboxy, $C_1$—$C_4$-Alkyl-carbonylamino oder gegebenenfalls durch $C_1$—$C_4$-Alkyl, $C_1$—$C_4$-Alkoxy, Chlor, Brom oder Nitro substituiertes Benzoylamino,

$R_{10}$ Wasserstoff, Methyl oder Hydroxy

$R_{11}$ Wasserstoff, Chlor, Brom, Nitro, Hydroxy, $C_1$—$C_4$-Alkyl-carbonylamino, gegebenenfalls durch $C_1$—$C_4$-Alkyl, $C_1$—$C_4$-Alkoxy, Chlor, Brom oder Nitro substituiertes Benzoylamino, Carboxy, $C_1$—$C_4$-Alkoxycarbonyl oder gegebenenfalls durch $C_1$—$C_4$-Alkyl oder Phenyl substituiertes Carbamoyl, wobei Phenyl durch $C_1$—$C_4$-Alkyl, $C_1$—$C_4$-Alkoxy, Chlor, Brom oder Nitro weitersubstituiert sein kann und

$R_{12}$ Wasserstoff, Chlor, Hydroxy oder Nitro bedeuten.

Ganz besonders bevorzugte Anthrachinonazo-Verbindungen entsprechen der Formel

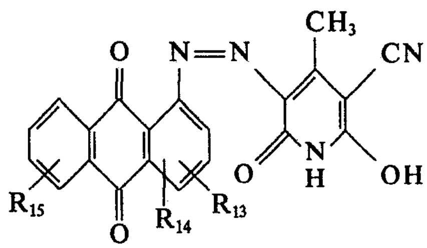

(IX)

$R_{13}$ Wasserstoff, Hydroxy oder gegebenenfalls durch Chlor oder Nitro substituiertes Benzoylamino,

$R_{14}$ Wasserstoff oder Methyl und

$R_{15}$ Wasserstoff, Chlor oder gegebenenfalls durch Chlor oder Nitro substituiertes Benzoylamino bedeuten.

Die Herstellung der Anthrachinonazo-Verbindungen der Formel (I) kann nach mehreren Verfahren erfolgen.

1. Man überführt das Aminoanthrachinon der Formel

$$A\text{—}NH_2 \qquad \text{(V)}$$

nach bekannten Verfahren in das Diazoniumsalz, z. B. mit Nitrosyl-Schwefelsäure oder durch Eintropfen der schwefelsauren Lösung in eine wäßrige Natriumnitrit-Lösung und kuppelt die erhaltene Suspension des Diazoniumsulfats bei 0°—90°C mit einer Kupplungskomponenten der Formel

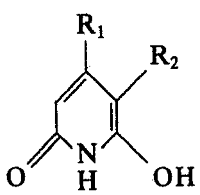

(X)

wobei $R_1$ und $R_2$ die oben genannte Bedeutung besitzen.

2. In Abänderung dieses Verfahrens kann man nach der Diazotierung das Diazoniumsalz aus der wäßrigen Suspension durch Filtration isolieren und in Wasser oder in einem organischen Lösungsmittel nach Zusatz einer anorganischen oder organischen Säure mit einer Kupplungskomponente der Formel (X) zum Azopigment umsetzen. Zur Reinigung des Pigments schließt sich gegebenenfalls eine Temperatur bei 60°—200° in demselben oder einem anderen organischen Lösungsmittel an. Als organische Lösungsmittel für die Kupplungsreaktion eignen sich Alkohole wie Methanol, Ethanol oder Glykolmonomethylether, Aromaten wie Toluol, 1,2-Dichlorbenzol, Nitrobenzol oder Pyridin und dipolar aprotische Lösungsmittel wie Dimethylformamid, N-Methylpyrrolidon, Dimethylsulfoxid oder Sulfolan. Geeignete Säuren zur Katalyse der Kupplungsreaktion sind z. B. anorganische Säuren wie Schwefelsäure, Phosphorsäure oder Salzsäure, organische Carbonsäuren wie Ameisensäure, Essigsäure, Chloressigsäure, Oxalsäure, Maleinsäure, 2,4-Dichlorbenzoesäure oder Terephthalsäure oder organische Sulfonsäuren wie Ethansulfonsäure, p-Toluolsulfonsäure oder Naphthalin-2,6-disulfonsäure.
3. Man löst oder suspendiert das Aminoanthrachinon der Formel (V) in einem organischen Lösungsmittel und diazotiert nach Zusatz einer anorganischen oder organischen Säure mit einem organischen Nitrit wie Methylnitrit oder Amylnitrit oder mit Natriumnitrit, das als wäßrige Lösung oder auch kristallin eingesetzt werden kann. Anschließend kuppelt man ohne Isolierung auf eine Kupplungskomponente der Formel (X). Zweckmäßigerweise schließt sich auch hier eine Temperung

des erhaltenen Pigmentes an.

Die für dieses Verfahren geeigneten organischen Lösungsmittel und anorganischen bzw. organischen Säuren entsprechen den bei Verfahren 2 aufgezählten Verbindungen.

4. Die Herstellung der Kupplungskomponenten der Forme (X) erfolgt meistens in Wasser. Ein weiteres Herstellungsverfahren für die Anthrachinonazo-Verbindungen der Formel (I) besteht darin, daß man auf die Isolierung und Reinigung der Kupplungskomponente verzichtet und deren wäßrige Suspension unmittelbar mit dem Diazoniumsalz eines Aminoanthrachinons der Formel (V) zum Azopigment umsetzt. Zweckmäßigerweise beschleunigt man die Kupplungsreaktion durch Erwärmen, vorzugsweise auf 50–100°C.

Die Kupplungskomponenten der Formel (X) und ihre Herstellung sind in der Literatur beschrieben. In den meisten Fällen erfolgt die Synthese durch Kondensation des Amids (XI) mit dem β-Ketoester (XII) unter Alkalikatalyse.

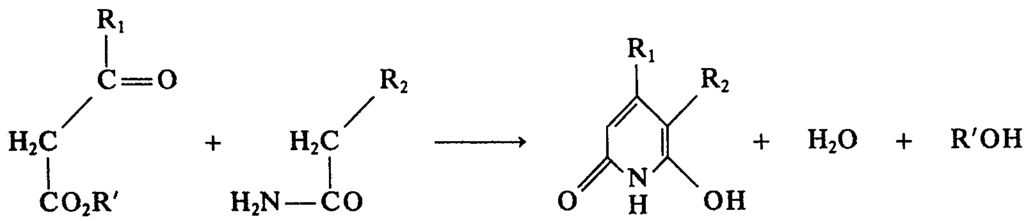

(XII) (XI) (X)

In den Formeln (X), (XI) und (XII) haben $R_1$ und $R_2$ die oben genannte Bedeutung.

Ein Verfahren zur Herstellung der Kupplungskomponente der Formel

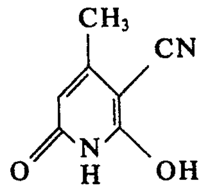

(XIII)

beschreibt I. Guareschi in Mem. Acad. Torino, cl. sci.fis., mat.e.nat. [2] 46, 11 (1895) (Sonderdruck) [C. 1896 I, 601; B. 29 Ref., 655 (1896)].

Weitere Verfahren zur Herstellung von Kupplungskomponenten der Formel

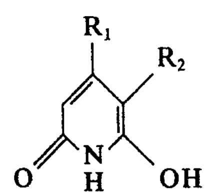

(X)

finden sich in den folgenden Literaturstellen

| | |
|---|---|
| DOS 27 19 079 | ($R_1$ = H; $R_2$ = CN) |
| Schulte und Mang, Arch. Pharmaz. 296, 501 (1963) | |
| | ($R_1$ = OH; $R_2$ = $CONH_2$, $CONHCH_3$) |
| DOS 21 41 453 | ($R_1$ = $CH_3$; $R_12$ = Cl) |
| DOS 28 47 657 | ($R_1$ = H, Alkyl; $R_2$ = $SO_2$–Alkyl) |
| DOS 27 05 562 | ($R_1$ = $CH_3$; $R_12$ = $COCH_3$) |

Die Verbindungen der Formel (I) fallen in einer für die Pigmentanwendung geeigneten Form an oder können durch an sich bekannte Nachbehandlungsverfahren in die geeignete Form übergeführt werden, z. B. durch Lösen oder Quellen in starken anorganischen Säuren wie Schwefelsäure und Austragen auf Eis. Die Feinverteilung kann auch durch Mahlen mit oder ohne Mahlhilfsstoffen wie anorganischen Salzen oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigments können durch Variation der Nachbehandlung beeinflußt werden.

Die Pigmente der Formel (I) eignen sich aufgrund ihrer Licht- und Migrationsechtheit für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen

können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine z. B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die Pigmente der Formel (I) sind weiterhin ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig und in plastischen Massen gut verteilbar.

Beispiel 1

a) In einem Gemisch aus 55 g Schwefelsäure (96%) und 22 g Nitrosylschwefelsäure (40%) werden 14 g 1-Amino-anthrachinon in der Kälte gelöst und bei Raumtemperatur 3 Stdn. gerührt. Anschließend verdünnt man mit 200 g Wasser und zerstört überschüssiges Nitrit mit Amidosulfonsäure. Dann setzt man 9,5 g 6-Hydroxy-4-methyl-3-cyan-pyridon-(2) zu, erhöht innerhalb von 2 Stdn. die Temperatur auf 90°C und hält bei dieser Temperatur bis sich kein Diazoniumsalz mehr nachweisen läßt. Nach Absaugen und Neutralwaschen erhält man 22,5 g (93% d. Th.) des rotstichig gelben Pigmentes der Formel

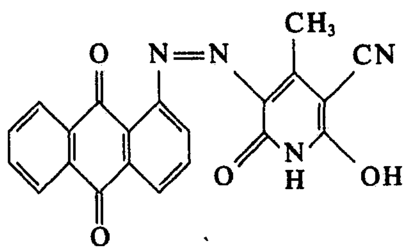

(XIV)

$C_{21}H_{12}N_4O_4$ (384.36)

| | | | |
|---|---|---|---|
| Ber.: | C 65,6 | H 3,2 | N 14,6 |
| Gef.: | C 65,9 | H 3,1 | N 14,6 |

b) 14 g 1-Aminoanthrachinon werden in 70 g Schwefelsäure (96%) kalt gelöst und in eine Lösung von 5 g Natriumnitrit in 250 g Eiswasser langsam eingetropft. Man rührt 2 Stdn. nach, saugt das Diazoniumsulfat ab und wäscht mit etwas Eiswasser nach. Der Niederschlag wird in 200 ml Methanol suspendiert, 20 ml Ameisensäure (85%) und 9,5 g 6-Hydroxy-4-methyl-3-cyanpyridon-(2) zugesetzt und 3 Stdn. am Rückflußkühler gekocht. Man saugt heiß ab, wäscht mit Methanol nach und erhält nach dem Trocknen 21 g (87% d. Th.) des in Beispiel 1 a genannten Gelbpigmentes.

c) In 300 ml Dimethylformamid werden 10 g Schwefelsäure (96%) und 14 g 1-Aminoanthrachinon bei Raumtemperatur gelöst. Man tropft eine Lösung von 7,5 g Amylnitrit in 20 ml DMF ein, rührt 3 Stdn. nach, setzt 9,5 g 6-Hydroxy-4-methyl-3-cyanpyridon-(2) zu und rührt ca. 5 Stdn. bei Raumtemperatur, bis sich kein Diazoniumsalz mehr nachweisen läßt. Dann saugt man ab, wäscht mit Dimethylformamid und Methanol nach und erhält nach dem Trocknen 22 g (91%) des in Beispiel 1 a genannten Gelbpigmentes.
Mit ähnlichen Ausbeuten und in gleicher Qualität erhält man das in Beispiel 1 a genannte Gelbpigment, wenn man bei dem in Beispiel 1 c genannten Verfahren anstelle von Schwefelsäure Essigsäure oder Chloressigsäure und anstelle von Dimethylformamid Toluol, 1.2-Dichlorbenzol oder Nitrobenzol verwendet.

d) 14,5 ml konz. Ammoniak werden tropfenweise mit 13 g Cyanessigsäuremethylester versetzt und 2 Stdn. bei 0°C gerührt. Dann setzt man 23 g Acetessigester und 14,5 ml konz. Ammoniak zu, rührt 4 Stdn. bei 80°, verdünnt mit 400 ml Wasser und stellt mit Schwefelsäure auf pH 2. Bei ca. 80°C trägt man dann das Diazoniumsalz aus 28 g 1-Aminoanthrachinon ein und rührt bei dieser Temperatur bis sich kein Diazoniumsalz mehr nachweisen läßt. Anschließend wird heiß abgesaugt, mit Wasser neutral gewaschen und getrocknet. Man erhält 21 g (87% d. Th.) des in Beispiel 1 a genannten Gelbpigmentes.

Nach den in den Beispielen 1 a–1 d genannten Verfahren erhält man unter Verwendung der in der folgenden Tabelle aufgeführten Aminoanthrachinone anstelle von 1-Aminoanthrachinon Azopigmente mit den angegebenen Farbtönen.

Tabelle 1

| Beispiel | Aminoanthrachinon | Farbton |
|---|---|---|
| 2 | 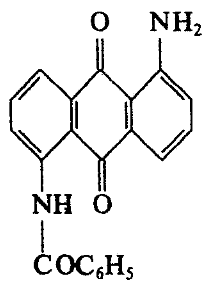 | Orange |
| 3 | 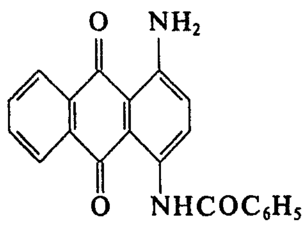 | Marron |
| 4 | 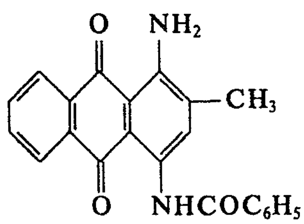 | Rotbraun |
| 5 | 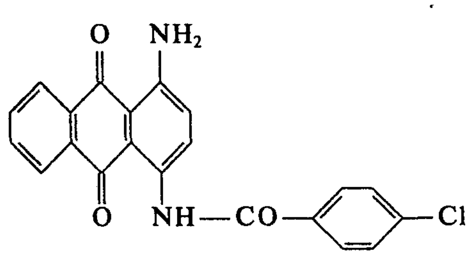 | Braun |
| 6 | 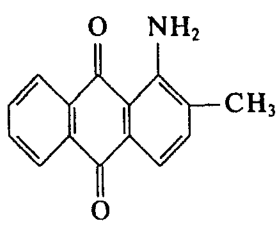 | rotstichig Gelb |
| 7 | 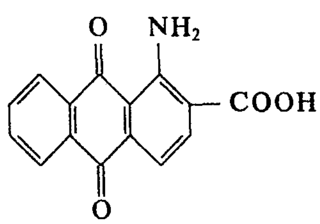 | Gelb |

(Fortsetzung)

| Beispiel | Aminoanthrachinon | Farbton |
|---|---|---|
| 8 | 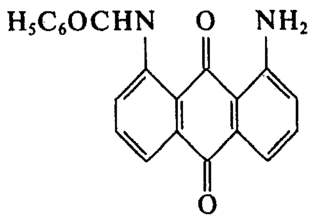 | Rot |
| 9 | 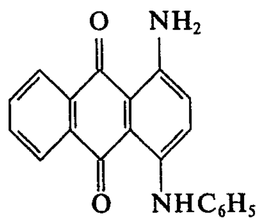 | Violett |
| 10 | 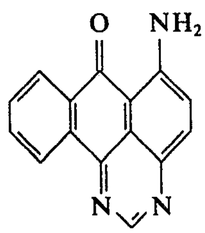 | Gelb |
| 11 | 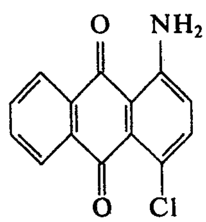 | Gelb |
| 12 | 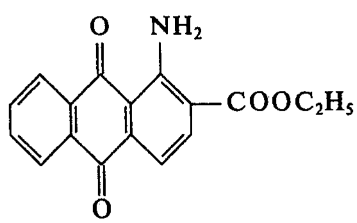 | Orange |
| 13 | 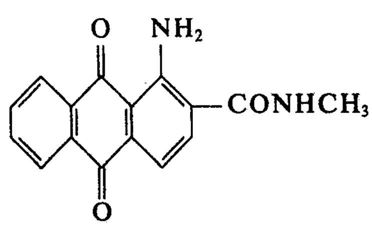 | Orange |
| 14 | 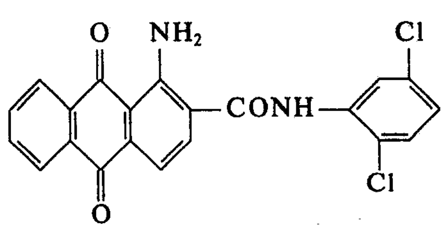 | Orange |

(Fortsetzung)

| Beispiel | Aminoanthrachinon | Farbton |
|---|---|---|
| 15 | 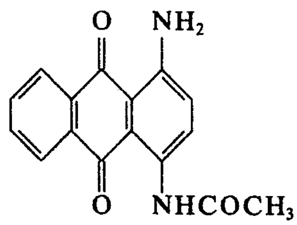 | Marron |
| 16 | 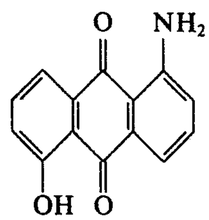 | Gelb |
| 17 | 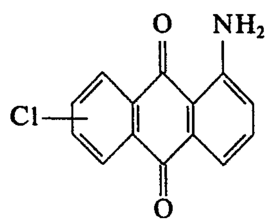 | Gelb |
| 18 | 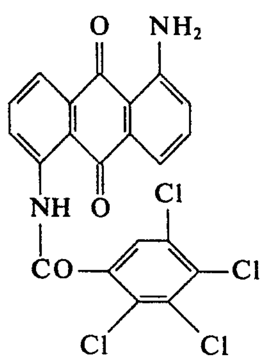 | rotstichig Gelb |
| 19 | 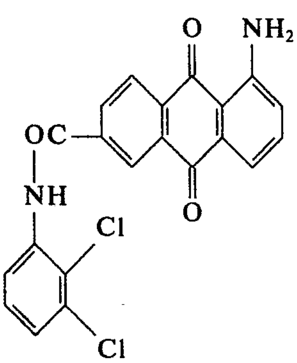 | Gelb |
| 20 | 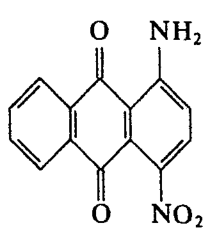 | Gelb |

Nach den in den Beispielen 1a–1c genannten Verfahren erhält man unter Verwendung der in der folgenden Tabelle aufgeführten Pyridone und Aminoanthrachinone anstelle von 6-Hydroxy-4-methyl-3-cyanpyridon-(2) und 1-Aminoanthrachinon Azopigmente mit den angegebenen Farbtönen.

Tabelle 2

| Beispiel | Pyridon-(2) | Aminoanthrachinon | Farbton |
|---|---|---|---|
| 21 | 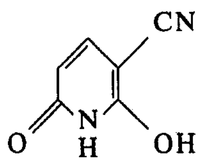 | 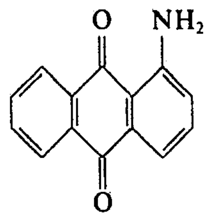 | Gelb |
| 22 | desgl. | 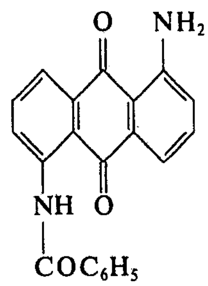 | Orange |
| 23 | desgl. | 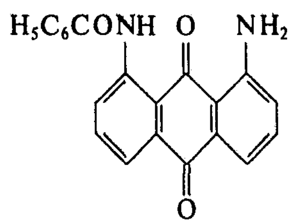 | Orange |
| 24 | desgl. | 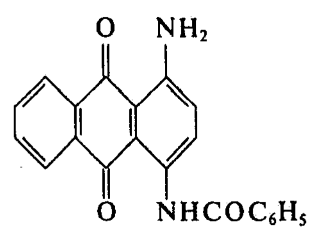 | Braun |
| 25 | 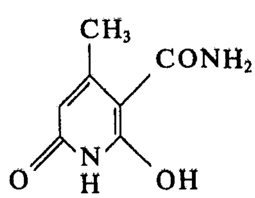 | 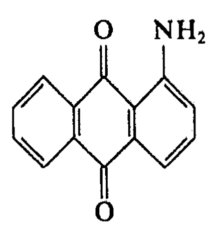 | Gelb |
| 26 | desgl. | 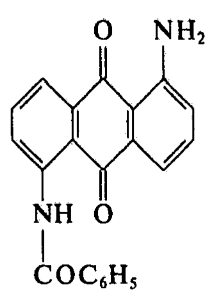 | Orange |

(Fortsetzung)

| Beispiel | Pyridon-(2) | Aminoanthrachinon | Farbton |
|---|---|---|---|
| 27 | 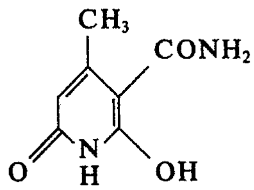 | 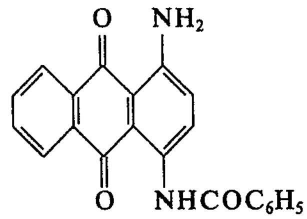 | Braun |
| 28 | 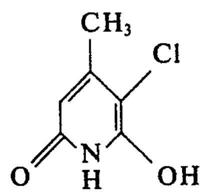 | 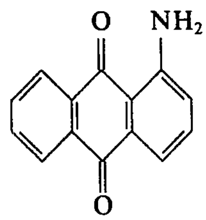 | Gelb |
| 29 | desgl. | 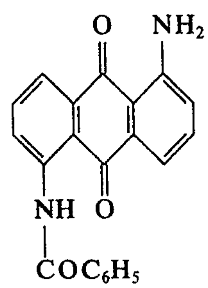 | Orange |
| 30 | desgl. | 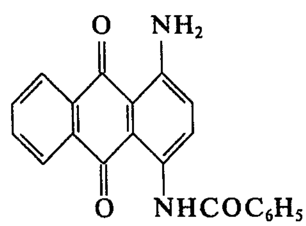 | Braun |
| 31 | 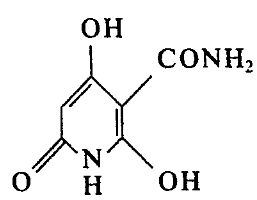 | 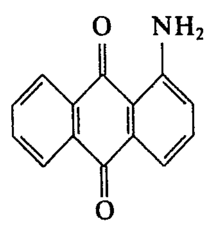 | Gelb |
| 32 | 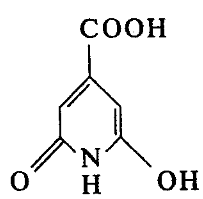 | 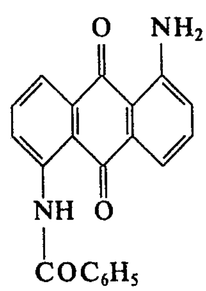 | rotstichig Gelb |

(Fortsetzung)

| Beispiel | Pyridon-(2) | Aminoanthrachinon | Farbton |
|---|---|---|---|
| 33 | 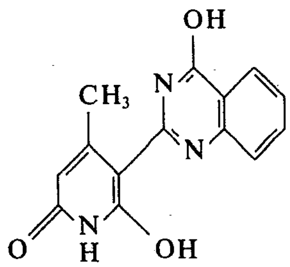 | 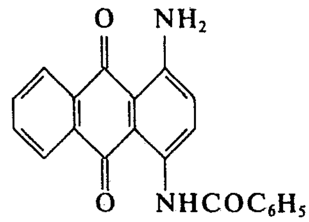 | Braun |
| 34 | 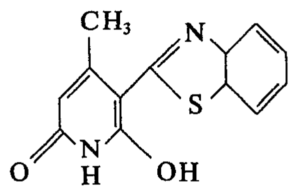 | 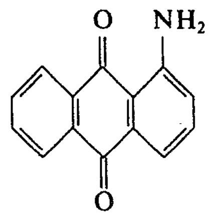 | Orange |
| 35 | 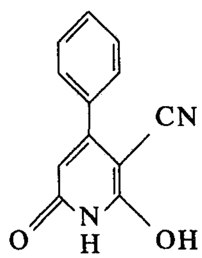 | 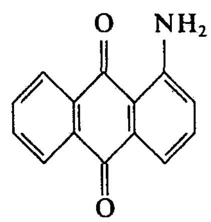 | Gelb |
| 36 | 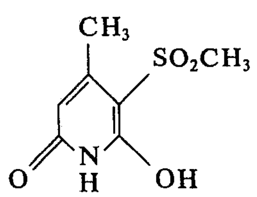 | 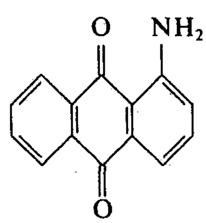 | Gelb |
| 37 | 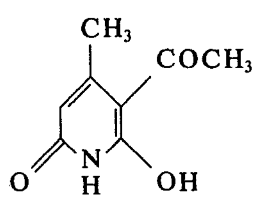 | 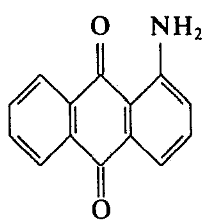 | Gelb |

Beispiel 38

a) 8 g des nach Beispiel 1 a erhaltenen feinverteilten Pigmentes werden mit einem Einbrennlack aus 25 g Kokosölalkydharz (40% Kokosöl), 10 g Melaminharz, 50 g Toluol und 7 g Glykolmonomethylether auf einer automatischen Hoover-Muller-Anreibmaschine angerieben. Man trägt die Mischung auf die zu lackierende Unterlage auf, härtet den Lack durch Einbrennen bei 130°C und erhält gelbe Lackierungen sehr guter Überlackierechtheit und hervorragender Licht- und Wetterechtheit.
Pigmentierte Einbrennlacke gleicher Echtheiten erhält man, wenn man 15—25 g des angegebenen Alkydharzes oder eines Alkydharzes auf Basis von Baumwollsaatöl, Ricinenöl, Ricinusöl oder synthetischen Fettsäuren verwendet und statt der angegebenen Melaminharzmenge 10—15 g des erwähnten Melaminharzes oder eines Kondensationsproduktes von Formaldehyd mit Harnstoff

oder mit Benzoguanamin einsetzt.

b) Reibt man statt der angegebenen Pigmentmenge 1 bis 10 g einer Mischung von Titandioxid (Rutiltyp) mit dem in Beispiel 38 a angegebenen Pigment im Verhältnis 0,5—50 : 1 in den im Beispiel 38 a angegebenen Lack ein, erhält man bei gleicher Weiterverarbeitung Lackierungen gleicher Echtheiten und mit steigendem Titandioxidgehalt nach weiß verschobenem, gelben Farbton.

Beispiel 39

In 100 g eines Nitrocelluloselackes, der aus 44 g Collodiumwolle (niedrigviskos, 35%ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1 a eingerieben. Nach Verstreichen und Trocknen erhält man gelbe Lackierungen hervorragender Licht- und Überlackierechtheit. Zu gleichen Ergebnissen kommt man bei Verwendung von Nitrolacken mit 10—15 g Nitrocellulosegehalt, 5—10 g Weichmachergehalt und 70—85 g Lösungsmittelgemisch unter bevorzugter Verwendung von aliphatischen Estern wie Ethylacetat, Butylacetat und Aromaten wie Toluol und Xylol und kleineren Anteilen aliphatischer Ether wie Glykolether und Alkohole wie Butanol. Unter Weichmachern können z. B. verstanden werden: Phthalsäureester wie Dioctylphthalat, Dibtuylphthalat, Ester der Phosphorsäure, Ricinusöl allein oder in Kombination mit ölmodifizierten Alkylharzen.

Lackierungen mit ähnlichen Echtheitseigenschaften erhält man bei Verwendung von anderen physikalisch trocknenden Sprit-, Zapon- und Nitrolacken, von lufttrocknenden Öl-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 40

5 g in feine Verteilung gebrachtes Pigment gemäß Beispiel 1 a werden in 100 g eines paraffinfrei trocknenden ungesättigten Polyesterharzes in einer Porzellankugelmühle angerieben. Mit der Anreibung werden 10 g Styrol, 59 g Melamin-Formaldehyd-Harz und 1 g einer Paste aus 40% Cyclohexanonperoxid und 60% Dibutylphthalat gut verrührt und schließlich 4 g Trocknerlösung (10%iges Kobaltnaphthenat in Testbenzin) und 1 g Siliconöllösung (1%ig in Xylol) beigemischt. Man trägt die Mischung auf grundiertes Holz auf und erhält eine hochglänzende, wasserfeste und wetterechte gelbe Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man gelbe Lackierungen hervorragender Wetter- und Ausblühechtheit.

Beispiel 41

100 g einer 65%igen Lösung eines aliphatischen Polyesters mit ca. 8% freien Hydroxylgruppen in Glykolmonoethyletheracetat werden mit 5 g des nach Beispiel 1 a erhaltenen Pigmentes angerieben und sodann mit 44 g einer 67%igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende gelbe Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatiscen Isocyanaten und hydroxylgruppenhaltigen Polyethern oder Polyestern, sowie mit feuchtigkeitstrocknenden, Polyharnstofflackierungen ergebenden Polyisocyanatlacken.

Beispiel 42

5 g eines Feinteiges, erhalten durch Kneten von 50 g des nach Beispiel 1 a erhaltenen Pigmentes mit 15 g eines Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50% Polyvinylacetat, gemischt. Man verstreicht die Farbe und erhält nach Trocknen gelbe Anstriche sehr guter Kalk- und Zementechtheit sowie hervorragender Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäure als Bindemittel enthalten, sowie Dispersionsfarben auf Basis von Polyvinylpropionat, Polymethacrylat oder Butadienstyrol.

## Beispiel 43

10 g des in Beispiel 42 erwähnten Pigment-Teiges werden mit einer Mischung aus 5 g Kreide und 5 g 20%iger Leimlösung vermischt. Man erhält eine gelbe Tapetenstreichfarbe, mit der man Überzüge hervorragender Lichtechtheit erzielt. Zur Herstellung des Pigment-Teiges können auch andere nicht ionogene Emulgatoren wie die Umsetzungsprodukte von Nonylphenyol mit Ethylenoxid oder ionogene Netzmittel, wie die Natriumsalze von Alkylarylsulfonsäure, z. B. der Dinaphthylmethandisulfonsäure, Natriumsalze von substituierten Sulfofettsäureestern und Natriumsalze von Paraffinsulfonsäuren in Kombination mit Alkylpolyglykolethern verwendet werden.

## Beispiel 44

Eine Mischung aus 65 g Polyvinylchlorid, 35 g Diisoocytlphthalat, 2 g Dibutylzinnmercaptid, 0,5 g Titandioxid und 0,5 g des Pigmentes von Beispiel 1 a wird auf einem Mischwalzwerk bei 165°C eingefärbt. Man erhält eine intensiv gelb gefärbte Masse, die zur Herstellung von Folien oder Formkörpern dienen kann. Die Färbung zeichnet sich durch hervorragende Licht- und sehr gute Weichmacherechtheit aus.

## Beispiel 45

0,2 g Pigment nach Beispiel 1 a werden mit 100 g Polyethylen-, Polypropylen- oder Polystyrolgranulat gemischt. Die Mischung kann entweder bei 220 bis 280°C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die gelben Formlinge besitzen sehr gute Licht- und Migrationsechtheit. In ähnlicher Weise können bei 280—300°C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

## Beispiel 46

1 g Pigment nach Beispiel 1 a, 10 g Titandioxid (Rutiltyp)und 100 g eines in Pulverform vorliegenden Mischpolymerisates auf Basis von Acrylnitril-Butadien-Styrol werden gemischt und auf einem Walzwerk bei 140—180°C eingefärbt. Man erhält ein gelb gefärbtes Fell, das granuliert und in einer Spritzgußmaschine bei 200—250°C verspritzt wird. Man erhält gelbe Formlinge sehr guter Licht- und Migrationsechtheit sowie ausgezeichneter Hitzebeständigkeit.

Auf ähnliche Weise, jedoch bei Temperaturen von 180—220°C und ohne Zusatz von Titandioxid werden Kunststoffe auf Basis von Celluloseacetat, Cellulosebutyrat und deren Gemisch mit ähnlichen Echtheiten gefärbt.

## Beispiel 47

0,2 g Pigment nach Beispiel 1 a werden in feinverteilter Form mit 100 g eines Kunststoffes auf Polycarbonat-Basis in einem Extruder oder in einer Knetschnecke bei 250—280°C gemischt und zu Granulat verarbeitet. Man erhält ein gelbes, transparentes Granulat hervorragender Lichtechtheit und Hitzebeständigkeit.

## Beispiel 48

90 g eines schwach verzweigten Polypropylenglykols mit einem Molekulargewicht von 2500 und einer Hydroxylzahl von 56, 0,25 g Endoethylenpiperazin, 0,3 g Zinn-(II)-octoat, 1,0 g eines Polyethersiloxans, 3,5 g Wasser, 12,0 g einer Anreibung von 10 g Pigment nach Beispiel 1 a in 50 g des angegebenen Polypropylenglykols werden gut miteinander gemischt und anschließend mit 45 g Toluylendiisocyanat (80% 2,4- und 20% 2,6-Isomeres) innig gemischt und in eine Form gegossen. Die Mischung trübt sich nach 6 Sekunden und die Schaumstoffbildung erfolgt. Nach 70 Sekunden hat sich ein intensiv gelb gefärbter, weicher Polyurethanschaumstoff gebildet, dessen Pigmentierung hervorragende Lichtechtheit aufweist.

Beispiel 49

90 g eines schwach verzweigten Polyesters aus Adipinsäure, Diethylenglykol und Trimethylolpropan mit einem Molekulargewicht von 2000 und einer Hydroxylzahl von 60 werden mit folgenden Komponenten vermischt: 1,2 g Dimethylbenzylamin, 2,5 g Natrium-Ricinusölsulfat, 2,0 g eines oxethylierten, benzylierten Oxidiphenyls, 1,75 g Wasser, 12 g einer Paste, hergestellt durch Anreiben von 10 g des Pigmentes nach Beispiel 1 a in 50 g des oben angegebenen Polyesters. Nach der Mischung werden unter Rühren 40 g Toluylendiisocyanat (65% 2,4- und 35% 2,6-Isomeres) eingerührt und die Mischung in eine Form gegossen und verschäumt. Nach 60 Sekunden hat sich ein gelb gefärbter, weicher Polyurethanschaumstoff gebildet, dessen Einfärbung sich durch sehr gute Lichtechtheiten auszeichnet.

Beispiel 50

Mit einer Druckfarbe, hergestellt durch Anreiben von 35 g Pigment nach Beispiel 1 a und 65 g Leinöl und Zugabe von 1 g Siccativ (Co-Naphthenat, 50%ig in Testbenzin) werden gelbe Offset-Drucke hoher Brillanz und Farbstärke und sehr guter Licht- und Lackierechtheit erhalten. Verwendung dieser Druckfarbe in Buch-, Licht-, Stein- oder Stahlstichdruck führt zu gelben Drucken ähnlicher Echtheiten. Verwendet man das Pigment zur Färbung von Blechdruck- oder niedrigviskosen Tiefdruckfarben oder Drucktinten, erhält man gelbe Drucke ähnlicher Echtheiten.

Beispiel 51

Aus 10 g des in Beispiel 42 angegebenen Pigment-Feinteiges, 100 g Traganth 3%ig, 100 g einer wäßrigen 50%igen Eialbuminlösung und 25 g eines nichtionogenen Netzmittels wird eine Druckpaste bereitet. Man bedruckt ein Textilfasergewebe, dämpft bei 100°C und erhält einen gelben Druck, der sich durch vorzügliche Echtheiten, insbesondere Lichtechtheiten auszeichnet. Im Druckansatz können anstelle des Traganths ein Eialbumins weitere, für das Fixieren auf der Faser verwendbare Bindemittel, beispielsweise solche auf Kunstharzbasis, Britishgum oder Celluloseglykolat verwendet werden.

Beispiel 52

Eine Mischung aus 100 g Crepe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50°C und mit 2 g des nach Beispiel 1 a erhaltenen Pigmentes eingefärbt und dann 12 Minuten bei 140°C vulkanisiert. Man erhält ein gelb gefärbtes Vulkanisat sehr guter Lichtechtheit.

Beispiel 53

100 g einer 20%igen wäßrigen Paste des Pigmentes nach Beispiel 1 a, beispielsweise hergestellt durch Auflösen des Farbstoffes in 96%iger Schwefelsäure, Austragen auf Eis, Filtrieren und Neutralwaschen mit Wasser, werden 22,5 l einer wäßrigen, ungefähr 9%igen Viskoselösung im Rührwerk zugesetzt. Die gefärbte Masse wird 15 Minuten gerührt, anschließend entlüftet und einem Spinn- und Entschwefelungsprozeß unterworfen. Man erhält gelbe Fäden oder Folien mehr sehr guter Lichtechtheit.

Beispiel 54

10 kg einer Papiermasse, enthaltend auf 100 g 4 g Cellulose, werden im Holländer während etwa 2 Stunden behandelt. Während dieser Zeit gibt man in je viertelstündigen Abständen 4 g Harzleim, dann 30 g einer etwa 15%igen Pigmentdispersion, erhalten durch Mahlen von 4,8 g des nach Beispiel 1 a erhaltenen Pigmentes mit 4,8 g Dinaphthalmethandisulfonsäure und 22 g Wasser in der Kugelmühle, sodann 5 g Aluminiumsulfat zu.

Nach Fertigstellung auf der Papiermaschine erhält man ein gelb gefärbtes Papier von hervorragender Lichtechtheit.

Beispiel 55

Das nach Beispiel 54 hergestellte, gelb pigmentierte Papier wird mit der 55%igen Lösung eines Harnstoff-Formaldehyd-Harzes in n-Butanol getränkt und bei 140°C eingebrannt. Man erhält ein gelbes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 42 angegebenen, gelben Pigmentfeinteig und wasserlösliche bzw. verseifbare Bindemittel enthält.

Beispiel 56

20 g des gemäß Beispiel 1 a erhaltenen Pigmentes werden in 50 g Dimethylformamid unter Verwendung eines Dispergierhilfsmittels, bestehend aus 50 g einer 10%igen Lösung von Polyacrylnitril in Dimethylformamid, in einer Perlmühle fein dispergiert. Das so erhaltene Pigmentkonzentrat wird in bekannter Weise zu Spinnlösung von Polyacrylnitril gegeben, homogenisiert und dann zu Filamenten nach bekannten Trocken- oder Naß-Spinnverfahren versponnen.

Man erhält gelb gefärbte Filamente, deren Färbung sich durch sehr gute Reib-, Wasch-, Migrations-, Hitze-, Licht- und Wetterechtheiten auszeichnen.

**Patentansprüche**

1. Anthrachinonazo-Verbindungen der Formel

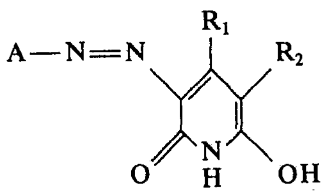

(I)

oder der tautomeren Formel

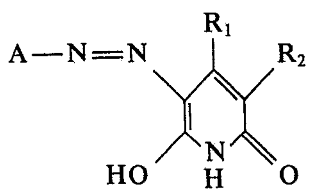

(Ia)

oder der tautomeren Formel

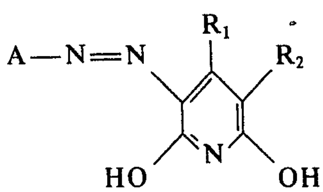

(Ib)

oder der tautomeren Formel

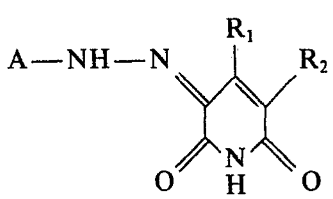

(Ic)

oder der tautomeren Formel

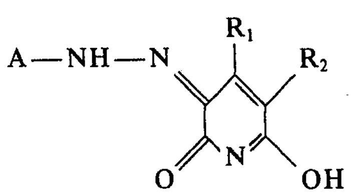

(Id)

oder der tautomeren Formel

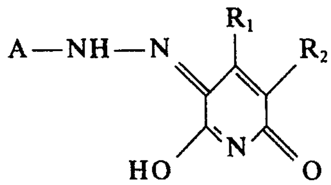

(Ie)

in denen

A einen von Sulfonsäuregruppen freien, gegebenenfalls weitersubstituierten $\alpha$-Anthrachinonrest, der vorzugsweise aus höchstens 5 kondensierten Ringen besteht,

$R_1$ Wasserstoff, Alkyl, vorzugsweise $C_1$—$C_4$-Alkyl, Aryl, vorzugsweise Phenyl oder Naphthyl, Carboxy oder Hydroxy und

$R_2$ Wasserstoff, Halogen, Nitro, Cyan, gegebenenfalls substituiertes Carbamoyl oder Sulfamoyl, Alkylcarbonyl, insbesondere ($C_1$—$C_4$-Alkyl)-carbonyl, Alkyl- oder gegebenenfalls substituiertes Arylsulfon, vorzugsweise $C_1$—$C_4$-Alkylsulfon oder gegebenenfalls substituiertes Phenylsulfon oder einen heteroaromatischen Rest bedeuten, z. B. einen Rest der Formel

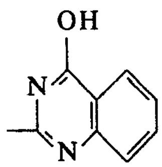

(II)

oder der Formel

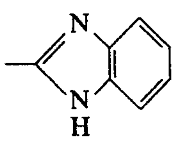

(III)

oder der Formel

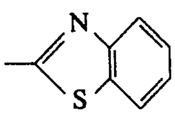

(IV)

2. Anthrachinonazo-Verbindungen der Formel

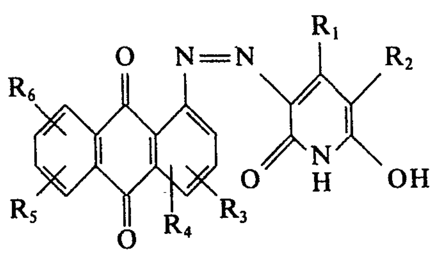

(VII)

in der $R_1$ und $R_2$ die in Anspruch 1 genannten Bedeutung haben und

$R_3$ Wasserstoff, Halogen wie Fluor, Chlor und Brom, Nitro, $C_1$—$C_4$-Alkyl, $C_1$—$C_4$-Alkoxy, $C_1$—$C_4$-Alkylamino, Benzylamino, Cyclohexylamino, $C_1$—$C_4$-Alkyl-mercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkyl)-carbonyl, ($C_1$—$C_4$-Alkoxy)-carbonyl, gegebenenfalls durch $C_1$—$C_4$-Alkyl, $C_1$—$C_4$-Alkoxy, Chlor oder Nitro substituiertes Phenylamino, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom, Nitro oder Carbonamido substituiert sein kann, Carboxy, Hydroxy, ($C_1$—$C_4$-Alkyl)-carbonylamino, gegebenenfalls durch $C_1$—$C_4$-Alkyl, $C_1$—$C_4$-Alkoxy, Fluor, Chlor, Brom oder Nitro substituiertes Benzoylamino oder gegebenenfalls durch $C_1$—$C_4$-Alkyl, $C_1$—$C_4$-Alkoxy, Fluor, Chlor, Brom oder Nitro substituiertes Benzolsulfonylamino,

$R_4$ Wasserstoff, Methyl, Chlor oder Hydroxy,

$R_5$ Wasserstoff, Halogen wie Fluor, Chlor oder Brom, Nitro, $C_1$—$C_4$-Alkyl, $C_1$—$C_4$-Alkoxy, $C_1$—$C_4$-Alkylamino, $C_1$—$C_4$-Alkylmercapto, gegebenenfalls durch $C_1$—$C_4$-Alkyl, $C_1$—$C_4$-Alkoxy, Fluor, Chlor, Brom oder Nitro substituiertes Phenylmercapto, ($C_1$—$C_4$-Alkoxy)-carbonyl, ($C_1$—$C_4$-Alkyl)-carbonyl, Benzylamino, Cyclohexylamino, gegebenenfalls durch $C_1$—$C_4$-Alkyl, $C_1$—$C_4$-Alkoxy, Chlor, Brom oder Nitro substituiertes Phenylamino, Carboxy, Hydroxy, gegebenenfalls durch $C_1$—$C_4$-Alkyl, Benzyl oder Phenyl mono- oder disubstituiertes Carbamoyl, wobei Phenyl durch $C_1$—$C_4$-Alkyl, $C_1$—$C_4$-Alkoxy, Fluor, Chlor, Brom oder Nitro substituiert sein kann, ($C_1$—$C_4$-Alkyl)-carbonylamino, gegebenenfalls durch $C_1$—$C_4$-Alkyl, $C_1$—$C_4$-Alkoxy, Fluor, Chlor, Brom oder Nitro substituiertes Benzoylamino, $C_1$—$C_4$-Alkansulfonylamino oder gegebenenfalls durch $C_1$—$C_4$-Alkyl, $C_1$—$C_4$-Alkoxy, Fluor, Chlor, Brom oder Nitro substituiertes Benzolsulfonylamino und

$R_6$ Wasserstoff, Halogen wie Fluor, Chlor und Brom oder Hydroxy bedeuten.

3. Anthrachinonazo-Verbindungen der Formel

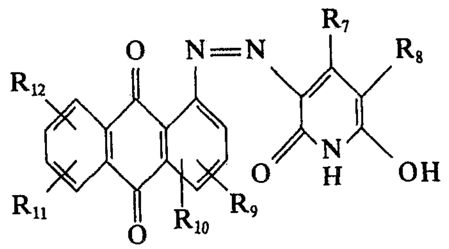

(VIII)

worin

$R_7$ Wasserstoff, Methyl, Carboxy oder Hydroxy

$R_8$ Wasserstoff, Cyan, gegebenenfalls durch $C_1$—$C_4$-Alkyl mono- oder disubstituiertes Carbamoyl oder Chlor,

$R_9$ Wasserstoff, Methyl, Chlor, Brom, Nitro, Acetyl, $C_1$—$C_4$-Alkoxy-carbonyl, gegebenenfalls durch $C_1$—$C_4$-Alkyl oder Phenyl substituiertes Carbamoyl, wobei Phenyl durch $C_1$—$C_4$-Alkyl, $C_1$—$C_4$-Alkoxy, Chlor, Brom oder Nitro substituiert sein kann, Carboxy, $C_1$—$C_4$-Alkyl-carbonylamino oder gegebenenfalls durch $C_1$—$C_4$-Alkyl, $C_1$—$C_4$-Alkoxy, Chlor, Brom oder Nitro substituiertes Benzoylamino,

$R_{10}$ Wasserstoff, Methyl oder Hydroxy,

$R_{11}$ Wasserstoff, Chlor, Brom, Nitro, Hydroxy, $C_1$—$C_4$-Alkylcarbonylamino, gegebenenfalls durch $C_1$—$C_4$-Alkyl, $C_1$—$C_4$-Alkoxy, Chlor, Brom oder Nitro substituiertes Benzoylamino, Carboxy, $C_1$—$C_4$-Alkylcarbonyl oder gegebenenfalls durch $C_1$—$C_4$-Alkyl oder Phenyl substituiertes Carbamoyl, wobei Phenyl durch $C_1$—$C_4$-Alkyl, $C_1$—$C_4$-Alkoxy, Chlor, Brom oder Nitro weitersubstituiert sein kann und

$R_{12}$ Wasserstoff, Chlor, Hydroxy oder Nitro bedeuten.

4. Anthrachinonazo-Verbindungen der Formel

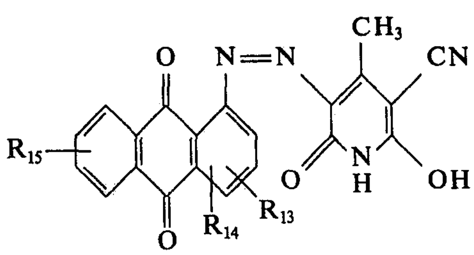

(IX)

worin

$R_{13}$ Wasserstoff, Hydroxy oder gegebenenfalls durch Chlor oder Nitro substituiertes Benzoylamino,

$R_{14}$ Wasserstoff oder Methyl und

$R_{15}$ Wasserstoff, Chlor oder gegebenenfalls durch Chlor oder Nitro substituiertes Benzoylamino bedeuten.

5. Anthrachinonazo-Verbindung der Formel

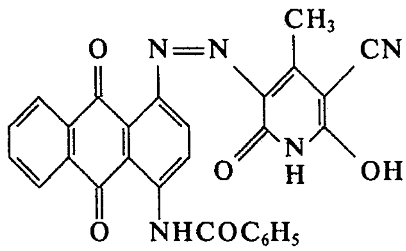

6. Anthrachinonazo-Verbindung der Formel

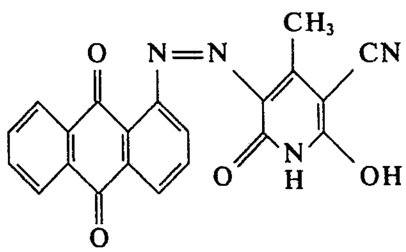

7. Anthrachinonazo-Verbindung der Formel

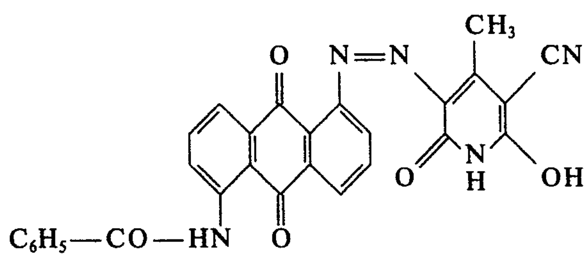

8. Verfahren zur Herstellung von Anthrachinonazo-Verbindungen der Formel (I), dadurch gekennzeichnet, daß man Aminoanthrachinone der Formel

$$A{-}NH_2 \qquad (V)$$

in der A die oben genannte Bedeutung hat, diazotiert und auf Kupplungskomponenten der Formel

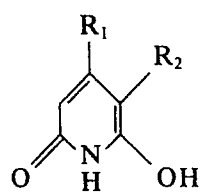

(X)

in der $R_1$ und $R_2$ die oben angegebene Bedeutung haben, kuppelt.

9. Verfahren zur Herstellung von Anthrachinonazo-Verbindungen gemäß Anspruch 8, dadurch gekennzeichnet, daß man bei der Herstellung der Kupplungskomponenten der Formel

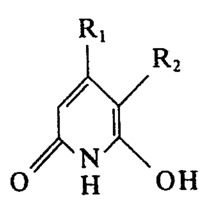

(X)

auf deren Isolierung verzichtet und die wäßrige Reaktionsmischung unmittelbar mit dem diazotierten Aminoanthrachinon der Formel

$$A{-}NH_2 \qquad (V)$$

umsetzt.

10. Verfahren zum Pigmentieren organischer makromolekularer Stoffe, dadurch gekennzeichnet, daß man Anthrachinon-Pigmente gemäß Anspruch 1 verwendet.

## Claims

1. Anthraquinone-azo compounds of the formula

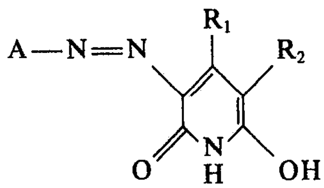

(I)

or of the tautomeric formula

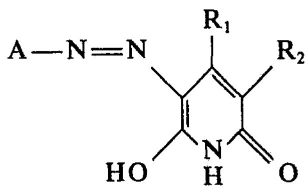

(Ia)

or of the tautomeric formula

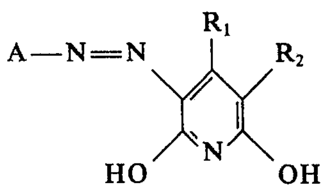

(Ib)

or of the tautomeric formula

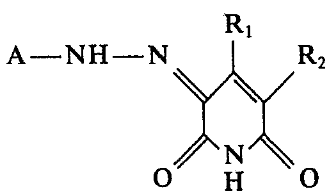

(Ic)

or of the tautomeric formula

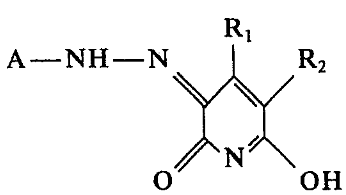

(Id)

or of the tautomeric formula

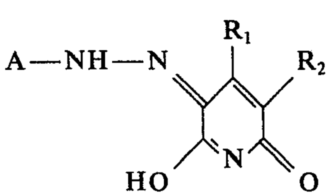

(Ie)

in which

A denotes an $\alpha$-anthraquinone radical which is free from sulphonic acid groups and is optionally further substituted and preferably consists of at most 5 fused rings,

$R_1$ denotes hydrogen, alkyl, preferably $C_1$—$C_4$-alkyl, aryl, preferable phenyl or naphthyl, carboxyl, or hydroxyl, and

$R_2$ denotes hydrogen, halogen, nitro, cyano, optionally substituted carbamoyl or sulphamoyl, alkylcarbonyl, in particular ($C_1$—$C_4$-alkyl)-carbonyl, alkyl- or optionally substituted aryl-sulphone, preferable $C_1$—$C_4$-alkyl-sulphone or sulphone or optionally substituted phenylsulphone, or a hetero-aromatic radical, for example a radical of the formula

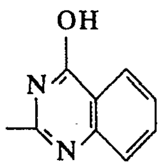

(II)

or of the formula

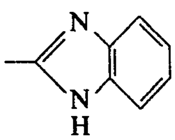

(III)

or of the formula

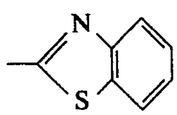

(IV)

2. Anthraquinone-azo compounds of the formula

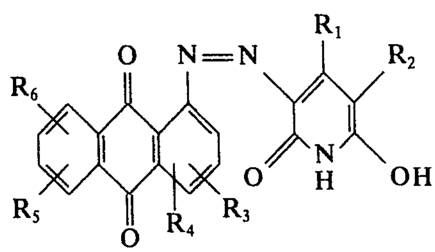

(VII)

in which

$R_1$ and $R_2$ have the meaning given in Claim 1, and

$R_3$ denotes hydrogen, halogen, such as fluorine, chlorine or bromine, nitro, $C_1$—$C_4$-alkyl, $C_1$—$C_4$-alkoxy, $C_1$—$C_4$-alkylamino, benzylamino, cyclohexylamino, $C_1$—$C_4$-alkyl-mercapto, phenylmercapto which is optionally substituted by $C_1$—$C_4$-alkyl, $C_1$—$C_4$-alkoxy, fluorine, chlorine, bromine or nitro, ($C_1$—$C_4$-alkyl)-carbonyl, ($C_1$—$C_4$-alkoxy)-carbonyl, phenylamino which is optionally substituted by $C_1$—$C_4$-alkyl, $C_1$—$C_4$-alkoxy, chlorine or nitro, carbamoyl which is optionally monosubstituted or disubstituted by $C_1$—$C_4$-alkyl, benzyl or phenyl, it being possible for phenyl to be substituted by $C_1$—$C_4$-alkyl, $C_1$—$C_4$-alkoxy, fluorine, chlorine, bromine, nitro or carboxamido, carboxyl, hydroxyl, ($C_1$—$C_4$-alkyl)-carbonylamino, benzoylamino which is optionally substituted by $C_1$—$C_4$-alkyl, $C_1$—$C_4$-alkoxy, fluorine, chlorine, bromine or nitro, or benzenesulphonylamino which is optionally substituted by $C_1$—$C_4$-alkyl, $C_1$—$C_4$-alkoxy, fluorine, chlorine, bromine or nitro,

$R_4$ denotes hydrogen, methyl, chlorine or hydroxyl,

$R_5$ denotes hydrogen, halogen, such as fluorine, chlorine or bromine, nitro, $C_1$—$C_4$-alkyl, $C_1$—$C_4$-alkoxy, $C_1$—$C_4$-alkylamino, $C_1$—$C_4$-alkylmercapto, phenylmercapto which is optionally substituted by $C_1$—$C_4$-alkyl, $C_1$—$C_4$-alkoxy, fluorine, chlorine, bromine or nitro, ($C_1$—$C_4$-alkoxy)-carbonyl, ($C_1$—$C_4$-alkyl)-carbonyl, benzylamino, cyclohexylamino, phenylamino which is optionally substituted by $C_1$—$C_4$-alkyl, $C_1$—$C_4$-alkoxy, chlorine, bromine or nitro, carboxyl, hydroxyl, carbamoyl which is optionally monosubstituted or disubstituted by $C_1$—$C_4$-alkyl, benzyl or phenyl, it being possible for phenyl to be substituted by $C_1$—$C_4$-alkyl, $C_1$—$C_4$-alkoxy, fluorine, chlorine, bromine or nitro, ($C_1$—$C_4$-alkyl)-carbonylamino, benzoylamino which is optionally substituted by $C_1$—$C_4$-alkyl, $C_1$—$C_4$-alkoxy, fluorine, chlorine, bromine or nitro, $C_1$—$C_4$-alkanesulphonylamino, or benzenesul-

phonylamino which is optionally substituted by $C_1-C_4$-alkyl, $C_1-C_4$-alkoxy, fluorine, chlorine, bromine or nitro and

$R_6$ denotes hydrogen, halogen, such as fluorine, chlorine or bromine, or hydroxyl.

3. Anthraquinone-azo compounds of the formula

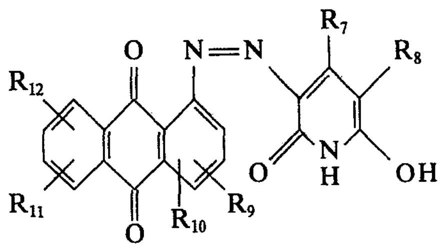

(VIII)

wherein

$R_7$ denotes hydrogen, methyl, carboxyl, or hydroxyl,

$R_8$ denotes hydrogen, cyano, carbamoyl which is optionally monosubstituted or disubstituted by $C_1-C_4$-alkyl, or chlorine,

$R_9$ denotes hydrogen, methyl, chlorine, bromine, nitro, acetyl, $C_1-C_4$-alkoxycarbonyl, carbamoyl which is optionally substituted by $C_1-C_4$-alkyl or phenyl, it being possible for phenyl to be substituted by $C_1-C_4$-alkyl, $C_1-C_4$-alkoxy, chlorine, bromine or nitro, carboxyl, $C_1-C_4$-alkylcarbonylamino, or benzoylamino which is optionally substituted by $C_1-C_4$-alkyl, $C_1-C_4$-alkoxy, chlorine, bromine or nitro,

$R_{10}$ denotes hydrogen, methyl or hydroxyl,

$R_{11}$ denotes hydrogen, chlorine, bromine, nitro, hydroxyl, $C_1-C_4$-alkylcarbonylamino, benzoylamino which is optionally substituted by $C_1-C_4$-alkyl, $C_1-C_4$-alkoxy, chlorine, bromine or nitro, carboxyl, $C_1-C_4$-alkoxycarbonyl, or carbamoyl which is optionally substituted by $C_1-C_4$-alkyl or phenyl, it being possible for phenyl to be further substituted by $C_1-C_4$-alkyl, $C_1-C_4$-alkoxy, chlorine, bromine or nitro, and

$R_{12}$ denotes hydrogen, chlorine, hydroxyl or nitro.

4. Anthraquinone-azo compounds of the formula

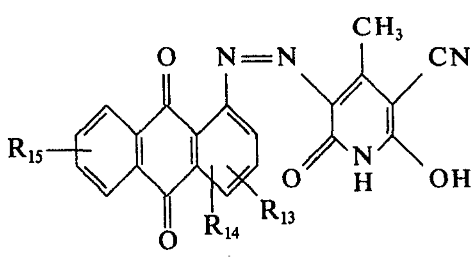

(IX)

wherein

$R_{13}$ denotes hydrogen, hydroxyl, or benzoylamino which is optionally substituted by chlorine or nitro,

$R_{14}$ denotes hydrogen or methyl and

$R_{15}$ denotes hydrogen, chlorine, or benzoylamino which is optionally substituted by chlorine or nitro.

5. The anthraquinone-azo compound of the formula

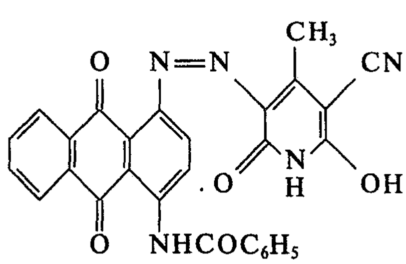

6. The anthraquinone-azo compound of the formula

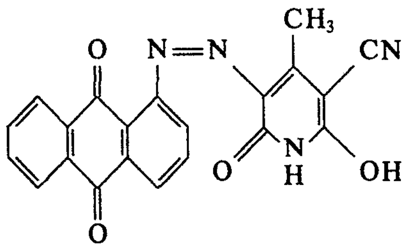

7. The anthraquinone-azo compound of the formula

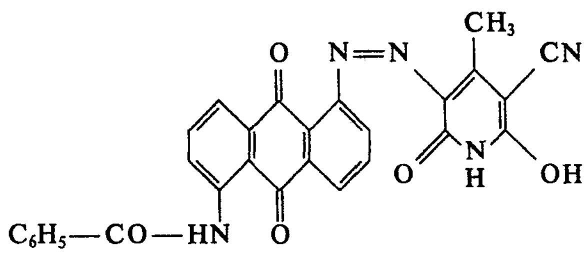

8. Process for the preparation of anthraquinone-azo compounds of the formula (I), characterised in that aminoanthraquinones of the formula

$$A\text{–}NH_2 \qquad (V)$$

in which A has the abovementioned meaning, are diazotised and the diazotisation products are coupled to coupling components of the formula

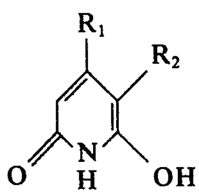

(X)

in which $R_1$ and $R_2$ have the abovementioned meaning.

9. Process for the preparation or anthraquinone-azo compounds according to Claim 8, characterised in that in the preparation of the coupling components of the formula

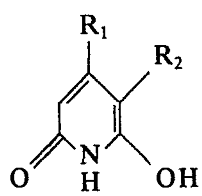

(X)

these components are not isolated and the aqueous reaction mixture is reacted directly with the diazotised aminoanthraquinone of the formula

$$A\text{–}NH_2 \qquad (V)$$

10. Process for pigmenting organic macromolecular substances, characterised in that anthraquinone pigments according to Claim 1 are used.

**Revendications**

1. Composé anthraquinone-azoïques de formule

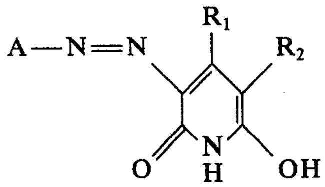

(I)

ou de formule tautomère

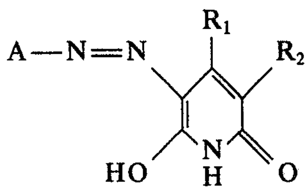

(Ia)

ou de formule tautomère

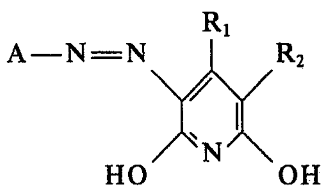

(Ib)

ou de formule tautomère

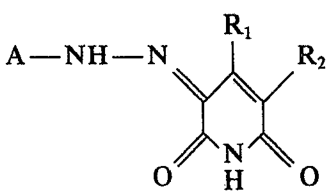

(Ic)

ou de formule tautomère

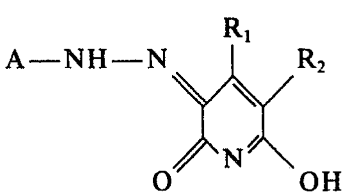

(Id)

ou de formule tautomère

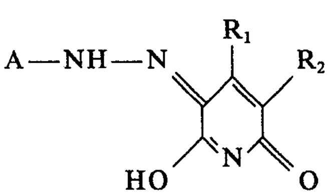

(Ie)

dans lesquelles

A représente un radical $\alpha$-anthraquinone éventuellement encore substitué, sans groupe acide sulfonique et qui, de préférence consiste en, au maximum, 5 noyaux condensés,

$R_1$ représente un atome d'hydrogène, un groupe alkyle, de préférence alkyle en $C_1$—$C_4$, aryle, de préfé-

rence phényle ou naphthyle, carboxyle ou hydroxyle, et

$R_2$ représente un atome d'hydrogène ou d'halogène ou un groupe nitro, cyano, carbamoyle ou sulfamoyle, éventuellement substitué, alkylcarbonyle, notamment alkyl (en $C_1$—$C_4$)-carbonyle, alkylsulfone ou arylsulfone éventuellement substitué, de préférence alkylsulfone en $C_1$—$C_4$ ou phénylsulfone éventuellement substituée ou un radical hétéroaromatique, par exemple un radical de formule

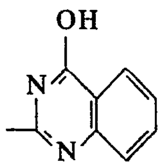

(II)

ou de formule

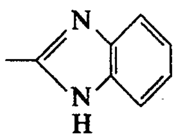

(III)

ou de formule

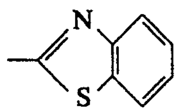

(IV)

2. Composés anthraquinone-azoïques de formule

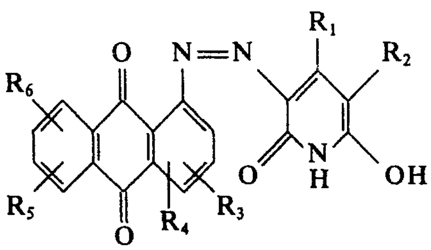

(VII)

dans laquelle

$R_1$ et $R_2$ ont le sens indiqué à la revendication 1, et

$R_3$ représente un atome d'hydrogène, un halogène comme le fluor, le chlore et le brome, un groupe nitro, alkyle en $C_1$—$C_4$, alcoxy en $C_1$—$C_4$, alkylamino en $C_1$—$C_4$, benzylamino, cyclohexylamino, alkyl (en $C_1$—$C_4$)-mercapto, phénylmercapto (éventuellement substitué par un groupe alkyle en $C_1$—$C_4$, alcoxy en $C_1$—$C_4$, un atome de fluor, de chlore ou de brome ou par un groupe nitro), alkyl (en $C_1$—$C_4$)-carbonyle, alcoxy (en $C_1$—$C_4$) carbonyle, phénylamino (éventuellement substitué par un groupe alkyle en $C_1$—$C_4$, alcoxy en $C_1$—$C_4$, un atome de chlore ou par un groupe nitro),carbamoyle (éventuellement mono- ou di-substitué par un groupe alkyle en $C_1$—$C_4$, benzyle ou phényle, ce groupe phényle pouvant être sustitué par und groupe alkyle en $C_1$—$C_4$, alcoxy en $C_1$—$C_4$, par un atome de fluor, de chlore ou de brome, par un groupe nitro ou carboxamido), carboxyle, hydroxyle, alkyl (en $C_1$—$C_4$)-carbonylamino, benzoylamino (éventuellement substitué par un groupe alkyle en $C_1$—$C_4$, alcoxy en $C_1$—$C_4$, par un atome de fluor, de chlore ou de brome ou par un groupe nitro), ou benzènesulfonylamino (éventuellement substitué par un groupe alkyle en $C_1$—$C_4$, alcoxy en $C_1$—$C_4$, un atome de fluor, de chlore ou de brome ou par un groupe nitro),

$R_4$ représente un atome d'hydrogène, un groupe méthyle, un atome de chlore ou un groupe hydroxyle,

$R_5$ représente un atome d'hydrogène, un halogène comme le fluor, le chlore ou le brome, un groupe nitro, alkyle en $C_1$—$C_4$, alcoxy en $C_1$—$C_4$, alkyl (en $C_1$—$C_4$)amino, alkyl (en $C_1$ à $C_4$)-mercapto, phénylmercapto (éventuellement substitué par un groupe alkyle en $C_1$—$C_4$, alcoxy en $C_1$—$C_4$, un atome de fluor, de chlore ou de brome ou par un groupe nitro), alcoxy (en $C_1$—$C_4$)-carbonyle, alkyl (en $C_1$—$C_4$)-carbonyle, benzylamino, cyclohexylamino, phénylamino (éventuellement substitué par un groupe alkyle en $C_1$—$C_4$, alcoxy en $C_1$—$C_4$, un atome de chlore, de brome ou par un groupe nitro), carboxyle, hydroxyle, carbamoyle (éventuellement substitué par un groupe alkyle en $C_1$—$C_4$, benzyle ou phényle, ce groupe phényle pouvant être substitué par un groupe alkyle en $C_1$—$C_4$, alcoxy en $C_1$—$C_4$, par un atome de fluor, de chlore ou de brome ou par un groupe nitro), alkyl (en $C_1$—$C_4$)-carbonylamino, benzoylamino (éventuellement substitué par un groupe alkyle en $C_1$—$C_4$, alcoxy en $C_1$—$C_4$, par un atome de fluor, de chlore ou de brome ou par un groupe nitro), alcane (en $C_1$—$C_4$) sul-

fonylamino ou benzènesulfonylamino (éventuellement substitué par un groupe alkyle en $C_1$—$C_4$, alcoxy en $C_1$—$C_4$, par un atome de fluor, de chlore ou de brome ou par un groupe nitro) et

$R_6$ représente un atome d'hydrogène, d'halogène comme le fluor, le chlore et le brome, ou un groupe hydroxyle.

3. Composés anthraquinone-azoïques de formule

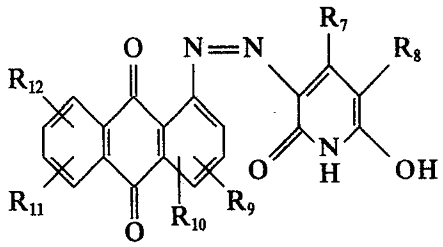

(VIII)

dans laquelle

$R_7$ représente un atome d'hydrogène ou un groupe méthyle, carboxyle ou hydroxyle,

$R_8$ représente un atome d'hydrogène, un groupe cyano ou carbamoyle (éventuellement mono- ou di-substitué par un groupe alkyle en $C_1$—$C_4$) ou un atome de chlore,

$R_9$ représente un atome d'hydrogène, un groupe méthyle, un atome de chlore ou de brome, un groupe nitro, acétyle, alcoxy (en $C_1$—$C_4$)-carbonyle, carbamoyle (éventuellement substitué par un groupe alkyle en $C_1$—$C_4$ ou par un groupe phényle, ce groupe phényle pouvant être substitué par un groupe alkyle en $C_1$—$C_4$, alcoxy en $C_1$—$C_4$, par du chlore, du brome ou par un groupe nitro), carboxyle, alkyl (en $C_1$—$C_4$)-carbonylamino ou benzoylamino (éventuellement substitué par un groupe alkyle en $C_1$—$C_4$, alcoxy en $C_1$—$C_4$, par du chlore ou du brome ou par un groupe nitro),

$R_{10}$ représente un atome d'hydrogène, un groupe méthyle ou hydroxyle,

$R_{11}$ représente un atome d'hydrogène, de chlore ou de brome ou un groupe nitro, hydroxyle, alkyl (en $C_1$—$C_4$) carbonylamino, benzoylamino (éventuellement substitué par un groupe alkyle en $C_1$—$C_4$, alcoxy en $C_1$—$C_4$, par du chlore ou du brome ou par un groupe nitro), carboxyle, alcoxy (en $C_1$—$C_4$) carbonyle ou carbamoyle (éventuellement substitué par un groupe alkyle en $C_1$—$C_4$, ou phényle, ce groupe phényle pouvant être substitué par un groupe alkyle en $C_1$—$C_4$, alcoxy en $C_1$—$C_4$, par un atome de chlore ou de brome ou par un groupe nitro), et

$R_{12}$ représente un atome d'hydrogène ou de chlore ou un groupe hydroxyle ou nitro.

4. Composés anthraquinone-azoïques de formule

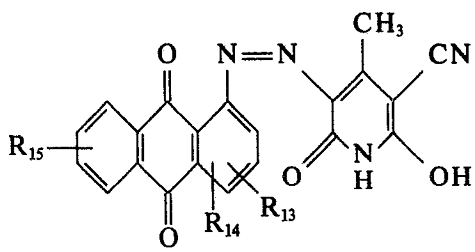

(IX)

dans laquelle

$R_{13}$ représente un atome d'hydrogène, un groupe hydroxyle ou un groupe benzoylamino évengtuellement substitué par du chlore ou par un groupe nitro,

$R_{14}$ représente de l'hydrogène ou un groupe méthyle, et

$R_{15}$ représente un atome d'hydrogène ou de chlore ou un groupe benzoylamino éventuellement substitué par du chlore ou par un groupe nitro.

5. Composé anthraquinone-azoïque de formule

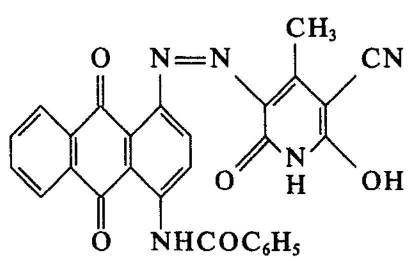

6. Composé anthraquinone-azoïque de formule

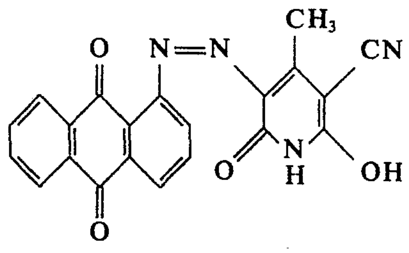

7. Composé anthraquinone-azoïque de formule

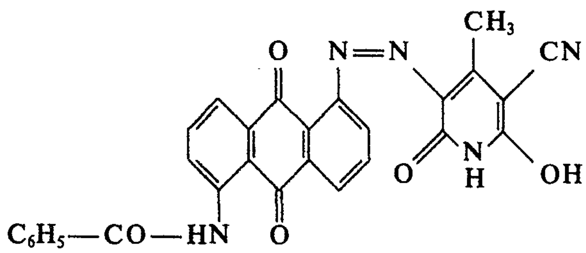

8. Procédé de préparation de composés anthraquinone-azoïques de formule (I), caractérisé en ce qu'on diazote des aminoanthraquinones de formule:

$A-NH_2$ (V)

dans laquelle A a le sens indiqué ci-dessus, et l'on copule avec des copulants de formule

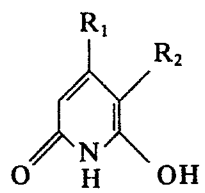

(X)

dans laquelle

$R_1$ et $R_2$ ont le sens indiqué ci-dessus.

9. Procédé de préparation de composés anthaquinone-azoïques selon la revendication 8, caractérisé en ce qu'on n'effectue pas d'isolement lors de la préparation des copulants de formule

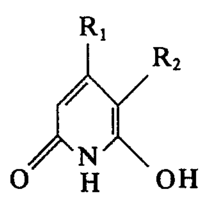

(X)

et l'on fait immédiatement réagir le mélange aqueux de réaction avec, après sa diazotation, l'aminoanthraquinone de formule:

$A-NH_2$ (V)

10. Procédé pour pigmenter des substances macromoléculaires organiques, caractérisé en ce qu'on utilise des pigments anthraquinoniques selon la revendication 1.